# EUROPEAN PATENT APPLICATION

(11) **EP 2 175 652 A1**
(43) Date of publication of application: **14.04.2010**
(21) Application number: 09762445.6
(22) Date of filing: 08.06.2009
(51) Int. Cl.: H04N 7/173, H04N 7/16

(54) **SERVER DEVICE, LICENSE DISTRIBUTION METHOD, AND CONTENT RECEIVING DEVICE**

(30) Priority: 09.06.2008 JP 2008150958
(71) Applicant: Sony Corporation, Tokyo 108-0075 (JP)
(72) Inventor: YAMAGISHI, Yasuaki, Tokyo 108-0075 (JP); SHIMA, Hisato, Tokyo 108-0075 (JP); IGARASHI, Tatsuya, Tokyo 108-0075 (JP); FUJISAWA, Kenji, Tokyo 108-0075 (JP); KAWAMOTO, Yoji, Tokyo 108-0075 (JP); FUTAGAMI, Motomasa, Tokyo 108-0075 (JP); NAKAJIMA, Yukako, Tokyo 108-0075 (JP)
(74) Representative: Jackson, Jonathan Andrew
(86) International application number: PCT/JP2009/060418
(87) International publication number: WO 2009/151015

(57) **Abstract**

[Object] To stabilize an operation of a license server by avoiding concentration of license acquisition requests from a large number of clients at a time right after a broadcast start time of a content.

[Solving Means] A web server (21) of an IPTV server sets an acquisition request time of a main license within a time period from a broadcast start time to a predetermined set time at random in accordance with an acquisition request of a license for reproducing an encrypted content, the acquisition request being from an IPTV client terminal (10), and transmits, to the IPTV client terminal (10), information on the acquisition request time of the main license and a temporary license including a temporary content key that corresponds to a reproduction of the broadcast content from the broadcast start time to the predetermined set time. A license server (22) transmits the main license including a main content key that corresponds to a whole reproduction of the content in accordance with an acquisition request of the main license, which is executed in the IPTV client terminal (10) based on the information on the acquisition request time.

## Description

### Technical Field

The present invention relates to a server apparatus that provides a content via a network or the like and a license necessary to reproduce a content, a license distribution method, and a content reception apparatus that acquires a content and a license necessary to reproduce a content and reproduces a content.

### Background Art

An IPTV (Internet Protocol Television) is a generic name of services or broadcasting techniques thereof by which digital television broadcasting is distributed using IPs. Hereinafter, apparatuses that use broadcast contents by the IPTV in such a manner are referred to as IPTV client terminals.

Generally, when a license for reproducing a content is acquired, contract terms, use conditions of a license, and the like are presented to a user and after a confirmation is obtained, a license is given to the user. This processing is often performed by a browser or the like that enables interactions (presentation of contract terms etc. to user and purchase confirmation) with a server side. For authentication performed between an IPTV client of the user and a server (in this case, purchase processing server) that are used at that time, a general-purpose authentication system using an SSL (Secure Socket Layer), a TLS (Transport layer Security), or the like is adopted (for example, Patent Document 1). In this regard, a server component such as a security accelerator (particular server equipment capable of performing authentication processing of a standard security protocol at high-speed) is prevalent on the server side.

### Prior Art Document

### Patent Document

Japanese Patent Application Laid-open No. 2006-031176 (paragraph 0044)

### Disclosure of the Invention

### Problem to be solved by the Invention

Incidentally, along with an increase of a distribution amount of contents via a network, it has been recently required to implement a license acquisition protocol based on an authentication system securer than the conventional general-purpose authentication system and also implement a license acquisition protocol specific to requirements of individual service providers. However, in such a secure and specific authentication system based on a license acquisition protocol, processing is complicated and an amount of operations are large as compared to the general-purpose authentication system.

For that reason, in a case where license acquisition requests from a large number of clients are concentrated in a short time period, such as a case of reproducing a content of a live broadcasting program, there has been a fear that a load on a server apparatus sharply increases and an operation becomes unstable.

In view of the circumstances described above, the present invention has an object to provide a server apparatus, a license distribution method, and a content reception apparatus that are capable of avoiding concentration of license acquisition requests from a large number of clients immediately after a broadcast start time of a content and stabilizing an operation of license distribution processing.

In order to solve the above-mentioned problem, according to the present invention, there is provided a server apparatus including: a temporary license processing section to set an acquisition request time of a main license within a time period from a broadcast start time to a predetermined set time at random in accordance with an acquisition request of a license for reproducing an encrypted broadcast content, the acquisition request being from a content reception apparatus, and transmit, to the content reception apparatus, information on the acquisition request time of the main license and a temporary license including a temporary content key that corresponds to a reproduction of the broadcast content from the broadcast start time to the predetermined set time; and a main license processing section to transmit, to the content reception apparatus, the main license including a main content key that corresponds to a whole reproduction of the broadcast content in accordance with an acquisition request of the main license, which is executed in the content reception apparatus based on the information on the acquisition request time.

In the present invention, by setting the acquisition request time of the main license at random, it is possible to avoid concentration of the license acquisition requests from a large number of content reception apparatuses at the time right after the broadcast start time of the content in the server apparatus. Accordingly, it is possible to prevent an operation of the server apparatus from being made unstable due to the concentration of excessive loads thereon.

The server apparatus according to the present invention may further include: a first authentication section to perform user authentication by a first system when the acquisition request of the license is received from the content reception apparatus; and a second authentication section to perform the user authentication by a second system that has a higher security strength than the first system when the acquisition request of the main license is received from the content reception apparatus.

In the present invention, concentration of the license acquisition requests from a large number of content reception apparatuses at the time right after the broadcast start time of the content can be avoided in the server apparatus that performs the secure user authentication. Thus, it is possible to more reliably prevent an operation of the server apparatus from being made unstable due to the concentration of excessive loads thereon.

In the server apparatus according to the present invention, the temporary license processing section may transmit, to the content reception apparatus, information indicating that the main license can be promptly transmitted in response to the acquisition request of the main license in a case where the acquisition request of the license from the content reception apparatus is received in a predetermined time period or more before the broadcast start time of the broadcast content.

Further, the temporary license processing section may transmit, to the content reception apparatus, the information indicating that the main license can be promptly transmitted in response to the acquisition request of the main license in a case where the acquisition request of the license from the content reception apparatus is received after the predetermined set time after the broadcast start time of the broadcast content.

According to another aspect of.the present invention, there is provided a license distribution method including: setting an acquisition request time of a main license within a time period from a broadcast start time to a predetermined set time at random in accordance with an acquisition request of a license for reproducing an encrypted broadcast content, the acquisition request being from a content reception apparatus, and transmitting, to the content reception apparatus, information on the acquisition request time of the main license and a temporary license including a temporary content key that corresponds to a reproduction of the broadcast content from the broadcast start time to the predetermined set time; and transmitting, to the content reception apparatus, the main license including a main content key that corresponds to a whole reproduction of the broadcast content in accordance with an acquisition request of the main license, which is executed in the content reception apparatus based on the information on the acquisition request time.

According to another aspect of the present invention, there is provided a content reception apparatus including: a temporary license acquisition request section to transmit an acquisition request of a license for reproducing an encrypted broadcast content to a first server apparatus, and acquire, as a response from the first server apparatus, information on an acquisition request time of a main license that is set at random within a time period from a broadcast start time to a predetermined set time, and a temporary license including a temporary content key that corresponds to a reproduction of the broadcast content from the broadcast start time to the predetermined set time; a main license acquisition request section to transmit an acquisition request of the main license to a second server apparatus based on the information on the acquisition request time of the main license, the information being acquired in the first license acquisition request section, and acquire, as a response from the second server apparatus, the main license including a main content key that corresponds to a whole reproduction of the broadcast content; and a decrypting section to decrypt the encrypted broadcast content by using the temporary content key acquired in the temporary license acquisition request section and the main content key acquired in the main license acquisition request section.

### Effect of the Invention

According to the present invention, it is possible to avoid concentration of license acquisition requests from a large number of clients immediately after a broadcast start time of a content and stabilize an operation of license distribution processing.

### Brief Description of Drawings

[Fig. 1] A diagram showing a structure of an IPTV system of an embodiment of the present invention.
[Fig. 2] A diagram showing a content reproduction sequence in the IPTV system of Fig. 1.
[Fig. 3] A diagram showing an example of a page of a content list.
[Fig. 4] A diagram showing an example of a page for purchasing a license.
[Fig. 5] An explanatory diagram of a determination method for a main license acquisition request timing.
[Fig. 6] A flowchart showing a generation procedure of the main license acquisition request timing.
[Fig. 7] A flowchart showing a Tp setting method based on prediction on frequency of license acquisition requests.
[Fig. 8] A diagram showing an XML schema that defines a structure of a DRMControlMessage.
[Fig. 9] A diagram showing the XML schema of Fig. 8 in a text format.
[Fig. 10] A diagram showing an example of the DRMControlMessage based on the XML schema of Figs. 8 and 9.
[Fig. 11] A block diagram showing a structural example of computer hardware.

### Mode for Carrying Out the Invention

Hereinafter, an embodiment of the present invention will be described in detail with reference to the drawings.

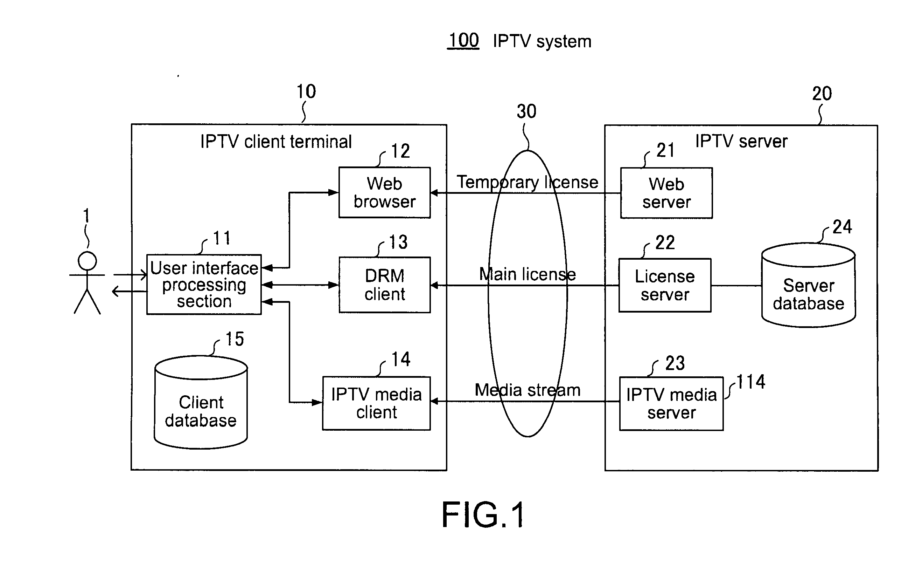

Fig. 1 is a block diagram showing a structure of an IPTV system 100 of an embodiment of the present invention.

As shown in the figure, the IPTV system 100 of this embodiment is constituted of an IPTV client terminal 10 serving as a content reception apparatus, an IPTV server 20 that can distribute a content by streaming, downloading, or the like and also distribute a license necessary for reproducing the content, and a network 30 that can connect those above.

The IPTV client terminal 10 is, for example, terminal equipment such as a PC (Personal Computer), a set top box, and a TV. The IPTV client terminal 10 includes a user interface 11, a web browser 12, a DRM (Digital Rights Management) client 13, an IPTV media client 14, a client database 15, and the like.

Specifically, the IPTV server 20 is constituted of one or a plurality of server apparatuses. Here, a case where the IPTV server 20 is constituted of a plurality of server apparatuses will be described. The IPTV server 20 includes a web server 21, a license server 22, an IPTV media server 23, a server database 24, and the like.

Next, a detailed structure of the IPTV client terminal 10 will be described.

The user interface 11 processes an input/output with respect to a user 1. For example, the user interface 11 performs processing such as inputting various commands from the user 1 and delivering them to the web browser 12, the DRM client 13, and the IPTV media client 14, and visually presenting various pieces of information from the web browser 12, the DRM client 13, and the IPTV media client 14 to the user 1.

The web browser 12 acquires metadata of contents from a metadata server (not shown) of the IPTV server 20 in advance and stores them in the client database 15, and displays a content list based on the metadata. With respect to this content list, the user can select a content that the user wishes to reproduce via the user interface 11 and cause the web browser 12 to transmit an acquisition request of a license necessary to reproduce this content.

Here, the metadata of a content includes a content ID, a content name, content access information such as a URI (Uniform Resource Identifier) that is an access destination of a content, access information necessary to access the license server 22 that is a distribution source of a license for reproducing the content, a broadcast time (start time and end time), attributes and details of a content, information on whether a license for reproducing the content has been purchased, and the like.

Further, as a response from the web server 21 to a temporary license acquisition request, the web browser 12 acquires a DRMControlMessage that includes a temporary license including a temporary content key Kcp and information on a main license acquisition request timing, and gives to the IPTV media client 14 the DRMControlMessage together with a content reproduction instruction. Here, the temporary license refers to a license necessary to reproduce a content for a time period from a preset broadcast start time to a predetermined set time. On the other hand, the main license refers to a license necessary to reproduce a whole content. Those temporary license and main license will be described later in detail.

Upon reception of the content reproduction instruction from the web browser 12, the IPTV media client 14 accesses, based on the metadata of the content stored in the client database 15, the IPTV media server 23 that distributes the content, acquires encrypted data of the content, and performs reproduction processing by decrypting the encrypted data of the content using the temporary content key Kcp included in the DRMControlMessage. Moreover, when acquiring a main license from the DRM client 13, the IPTV media client 14 performs reproduction processing by decrypting the content acquired from the IPTV media server 23 using a main content key Kc included in the main license.

The DRM client 13 extracts the temporary content key Kcp included in the temporary license from the DRMControlMessage and passes it to the IPTV media client 14, or transmits a main license acquisition request to the license server 22 of the IPTV server 20 based on the information on the main license acquisition request timing described in the DRMControlMessage to thereby acquire the main license including the main content key Kc, which is transmitted from the license server 22, and gives the main content key Kc to the IPTV media client 14.

The client database 15 is constituted of, for example, a storage apparatus such a hard disk drive and a semiconductor memory, and stores content metadata and the like acquired from the IPTV server 20.

Next, a structure of the IPTV server 20 will be described in detail.

The web server 21 performs user authentication, license purchase confirmation, and the like in response to the temporary license acquisition request from the web browser 12 of the IPTV client terminal 10. In a case where the user authentication has succeeded and a license purchase has been confirmed, the web server 21 generates a DRMControlMessage that includes a temporary license including a temporary content key Kcp and information on a main license acquisition request timing to thereby respond to the web browser 12 of the IPTV client terminal 10. The generation method for the DRMControlMessage will be described later.

In response to the main license acquisition request from the DRM client 13 of the IPTV client terminal 10, the license server 22 performs user authentication by a system that is securer and has more processing procedures and larger amount of operations than the browser standard authentication system described above. In a case where this user authentication has succeeded, the license server 22 checks a license purchase history of the user, which is stored in the server database 24 and in a case where it is confirmed that the license has been purchased, the license server 22 distributes a main license including a main content key Kc to the DRM client 13.

The IPTV media server 23 distributes encrypted data of a content in response to a content request from the IPTV media client 14.

Next, an operation in a case where in the IPTV system 100, the IPTV client terminal 10 acquires, from the IPTV server 20, a content and a temporary content key Kcp and main content key Kc for reproducing the content and reproduces the content using those keys will be described.

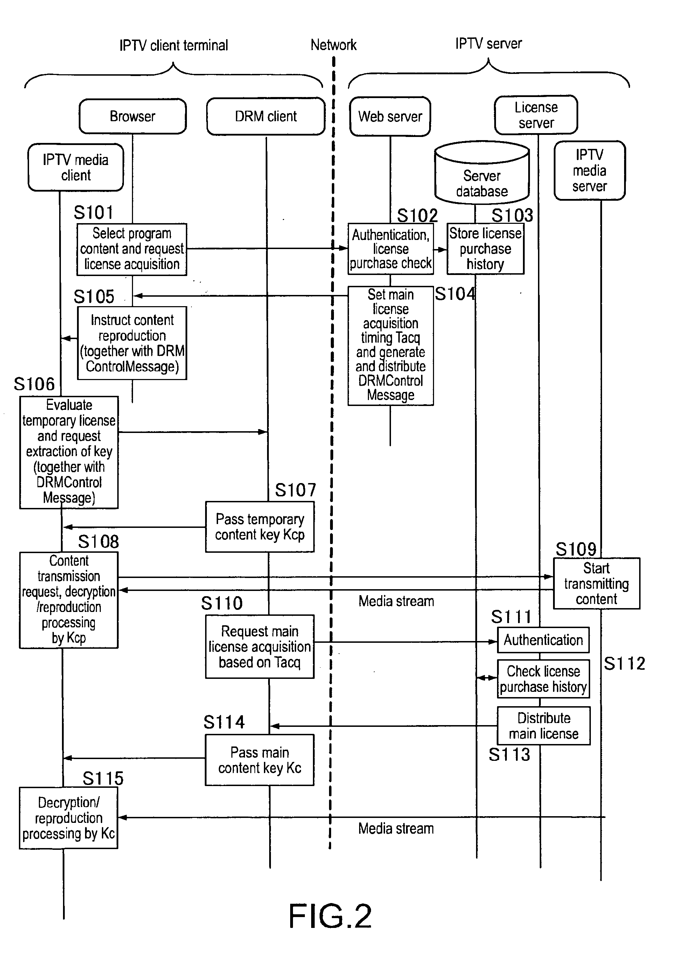

Fig. 2 is a diagram showing a content reproduction sequence in the IPTV system 100.

First, the user 1 of the IPTV client terminal 10 instructs the web browser 12, via the user interface 11, to display a page of a content list based on the metadata stored in the client database 15. In accordance with the instruction, the web browser 12 creates a page of a content list based on the metadata stored in the client database 15 and presents it to the user 1 via the user interface 11.

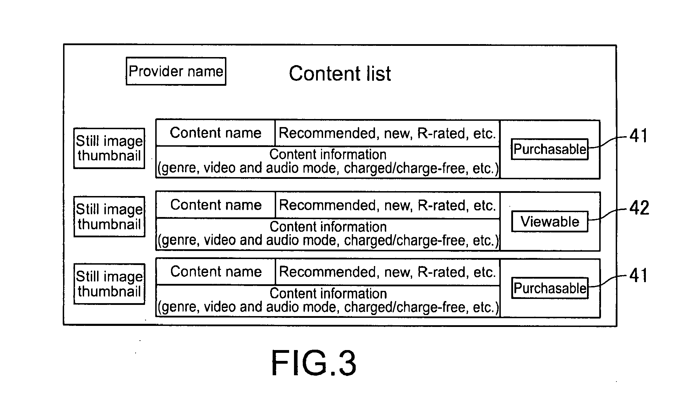

Fig. 3 shows an example of the page of the content list. In the page of the content list, there are displayed, for each content, a still image thumbnail of a content, a content name, attributes of the content (recommended program, New Year's program, R-rated program, etc.), details of the content (genre, video and audio mode, charged/charge-free), a mark 41 indicating that a license for reproducing the content can be purchased (license has not yet been purchased), a mark 42 indicating that the content can be reproduced (license has been purchased), and the like.

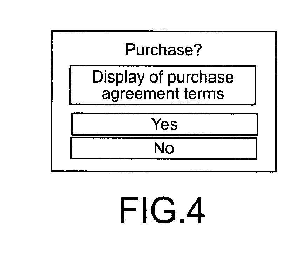

Here, the mark 41 indicating that a license can be purchased (license has not yet been purchased) has a function as a click button. When a mark 41 of a certain content is clicked by the user 1, a page in which descriptions of purchase agreement terms on the license and a button for causing the user 1 to select acceptance/non-acceptance of the purchase are arranged is displayed as shown in Fig. 4, for example. Further, when the acceptance button is clicked by the user 1 on this page, the web browser 12 extracts a content ID corresponding to the content selected by the user 1 from the metadata, and transmits a temporary license acquisition request including the content ID, a user ID, and a password to the web server 21 of the IPTV server 20 (Step S101).

Upon reception of the temporary license acquisition request transmitted from the web browser 12 of the IPTV client terminal 10, the web server 21 of the IPTV server 20 performs user authentication, based on the user ID and the password included in the temporary license acquisition request, by the browser standard authentication protocol such as an SSL and a TLS. When the web server 21 has succeeded this user authentication, the web server 21 checks whether the user has purchased a license for reproducing the content corresponding to the content ID with reference to the license purchase history of the user, which is stored in the server database 24 (Step S102). In this case, there is no history indicating that the license for reproducing the content has been purchased in the license purchase history of the user. So, the web server 21 of the IPTV server 20 stores license purchase information of this time in the license purchase history of the user (Step S103).

Next, the web server 21 of the IPTV server 20 generates a DRMControlMessage that includes a temporary license including a temporary content key Kcp and information on a main license acquisition request timing, and transmits it to the web browser 12 of the IPTV client terminal 10 (Step S104). Here, as the temporary content key Kcp, a key prepared in advance for each content is used. The information on the main license acquisition request timing refers to information for designating a time at which the DRM client 13 of the IPTV client terminal 10 transmits a main license acquisition request.

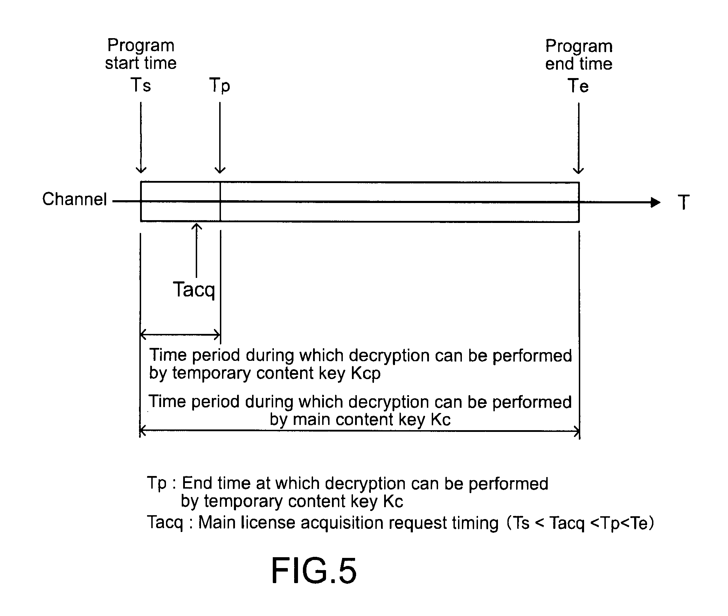

Next, the outline of a determination method for a main license acquisition request timing will be described with reference to Fig. 5. Ts represents a broadcast start time of a content, Te represents a broadcast end time of a content, Tp represents an end time of a content that can be decrypted by a temporary content key Kcp, the end time being a time determined in advance for each content. A time period from the broadcast start time Ts to Tp is about several seconds or several minutes, for example. A time period during which decryption can be performed by a main content key Kc is a time period from Ts to Te. Tacq is an example of the main license acquisition request timing. In a case where a time at which a license has been purchased (time at which license purchase information has been stored) Tx is caused in a range from the broadcast start time Ts to Tp, the web server 21 of the IPTV server 20 sets, as a main license acquisition request timing Tacq, a time that is determined at random in a range from a time Tpurchase at which the license has been purchased to Tp.

The web server 21 of the IPTV server 20 generates the DRMControlMessage with the use of the information on the main license acquisition request timing and the temporary content key Kcp described above, and transmits it to the web browser 12 of the IPTV client terminal 10 (Step S104).

Upon acquisition of the DRMControlMessage from the web server 21 of the IPTV server 20, the web browser 12 of the IPTV client terminal 10 gives, to the IPTV media client 14, the DRMControlMessage together with the content reproduction instruction (Step S105).

Upon reception of the DRMControlMessage together with the content reproduction instruction from the web browser 12, the IPTV media client 14 gives the DRMControlMessage to the DRM client 13 and also requests the DRM client 13 to extract the temporary content key Kcp (Step S106).

Based on the request from the IPTV media client 14, the DRM client 13 extracts the temporary content key Kcp included in the temporary license from the DRMControlMessage to pass it to the IPTV media client 14 (Step S107).

Upon acquisition of the temporary content key Kcp from the DRM client 13, based on the content metadata stored in the client database 15, the IPTV media client 14 acquires encrypted data of the content by accessing the IPTV media server 23 that distributes the content, and performs reproduction processing by decrypting the encrypted data of the content (Steps S108 and S109). Accordingly, in the IPTV client terminal 10, a reproduction of the content for at least the time period from the broadcast start time Ts to Tp is guaranteed.

On the other hand, based on the information on the main license acquisition request timing described in the DRMControlMessage, the DRM client 13 transmits a main license acquisition request including a content ID, a user ID, a password, and the like to the license server 22 of the IPTV server 20 (Step S110). Specifically, the DRM client 13 transmits the main license acquisition request to the license server 22 of the IPTV server 20 at a time indicated by the information on the main license acquisition request timing.

Upon reception of the main license acquisition request from the DRM client 13 of the IPTV client terminal 10, the license server 22 of the IPTV server 20 performs user authentication that is securer and has more processing procedures and larger amount of operations than the browser standard authentication system described above (Step S111). When the user authentication has succeeded, the license server 22 of the IPTV server 20 checks, based on the content ID, the user ID, and the like that are included in the main license acquisition request, whether a license for reproducing the content corresponding to the content ID has been purchased with reference to the license purchase history of the user (Step S112). When confirming that the license has been purchased, the license server 22 of the IPTV server 20 distributes a main license including a main content key Kc to the DRM client 13 (Step S113).

Upon acquisition of the main license including the main content key Kc from the license server 22, the DRM client 13 gives the main content key Kc to the IPTV media client 14 (Step S114).

Upon acquiring the main content key Kc from the DRM client 13, the IPTV media client 14 decrypts the content acquired from the IPTV media server 23 using the main content key Kc and performs reproduction processing (Step S115). Thus, the reproduction processing up until the end time of the content is performed in the IPTV client terminal 10.

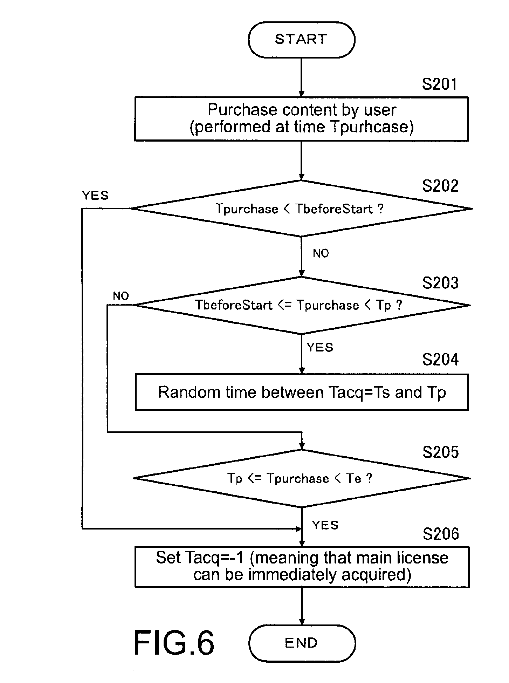

Next, a generation procedure of the main license acquisition request timing will be described with reference to Fig. 6.

When the license has been purchased (license purchase information is newly stored in the server database 24) (Step S201), the web server 21 of the IPTV server 20 judges whether that time Tpurchase is earlier than a time TbeforeStart that is earlier by a predetermined time period than the broadcast start time Ts of the content. Here, the time TbeforeStart that is earlier by a predetermined time period than the broadcast start time Ts is a time that can become a sufficient time for the broadcast start time Ts so as to avoid concentration of load on the server apparatus, and is, for example, a time of one day before the broadcast start time Ts.

In a case where the web server 21 of the IPTV server 20 judges in this judgment that the time Tpurchase at which the license has been purchased is earlier than the time TbeforeStart, the web server 21 does not determine the information on the main license acquisition request timing Tacq at random in a range from the time Tpurchase to TP but generates a DRMControlMessage that does not include the temporary content key Kcp with the information on the main license acquisition request timing Tacq being set as "-1" (Step S206), and transmits this to the web browser 12 of the IPTV client terminal 10.

Further, when judging in the judgment of Step S202 that the time Tpurchase at which the license has been purchased is later than the time TbeforeStart, the web server 21 of the IPTV server 20 judges whether the time Tpurchase at which the license has been purchased is earlier than Tp (Step S203). In a case of YES, the web server 21 of the IPTV server 20 sets a time determined at random in a range from the time Tpurchase at which the license has been purchased to Tp as the information on the main license acquisition request timing Tacq (Step S204). In a case of NO, the web server 21 then judges whether the time Tpurchase at which the license has been purchased is in a range between Tp and the broadcast end time Te of the content (Step S205). In a case of YES, the web server 21 of the IPTV server 20 generates a DRMControlMessage that does not include the temporary content key Kcp with the information on the main license acquisition request timing Tacq being set as "-1" (Step S206), and transmits this to the web browser 12 of the IPTV client terminal 10.

When the DRM client 13 of the IPTV client terminal 10 knows that the information on the main license acquisition request timing Tacq that is described in the DRMControlMessage is "-1", the DRM client 13 promptly transmits the main license acquisition request including the content ID, the user ID, the password, and the like to the license server 22 of the IPTV server 20. Specifically, when a license is purchased in a time period during which loads on the license server 22 are not concentrated, the IPTV client terminal 10 can promptly transmit a main license acquisition request to the IPTV server 20 and thus acquire a main license. Accordingly, in this case, the encrypted content that has been acquired from the IPTV media server 23 can be decrypted using the main content key Kc and reproduction processing can be performed from the broadcast start time Ts of the content in the IPTV client terminal 10.

Incidentally, there has been described that Tp is an end time of a content that can be decrypted by a temporary content key Kcp and is a time determined in advance for each content. In a case where this Tp is set in the IPTV server 20, Tp may be set based on prediction on frequency of license acquisition requests with respect to the content.

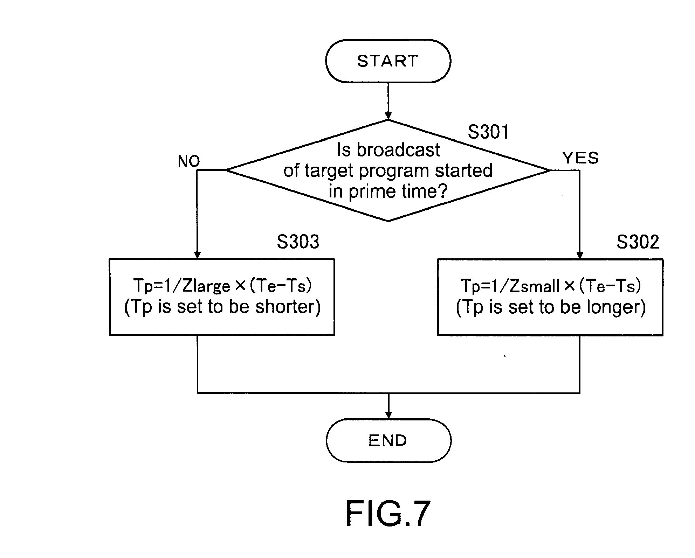

Fig. 7 is a flowchart showing a Tp setting method based on the prediction on frequency of license acquisition requests. In this example, the frequency of license acquisition requests is set in accordance with a broadcast time period of a content. Specifically, a Tp calculation method is changed between contents whose broadcasting is started in a time period of from 7 p.m. to 9 p.m., which is a so-called "prime time", and other contents (Step S301). As to contents whose broadcasting is started in the prime time, it is predicted that license acquisition requests from more users are received, and therefore a time period from a broadcast start time Ts to Tp is set to be longer (Step S301). Conversely, as to contents whose broadcasting is not started in the prime time, a time period from a broadcast start time Ts to Tp is set to be shorter (Step S302). As a result, Tp can be successfully set in accordance with the frequency of license acquisition requests. It should be noted that in Fig. 7, Zlarge is equal to or larger than 1 and is a set value larger than Zsmall, and Zsmall is equal to or larger than 1 and is a set value smaller than Zlarge.

Next, an example of an XML schema that defines a structure of the DRMControlMessage will be described.

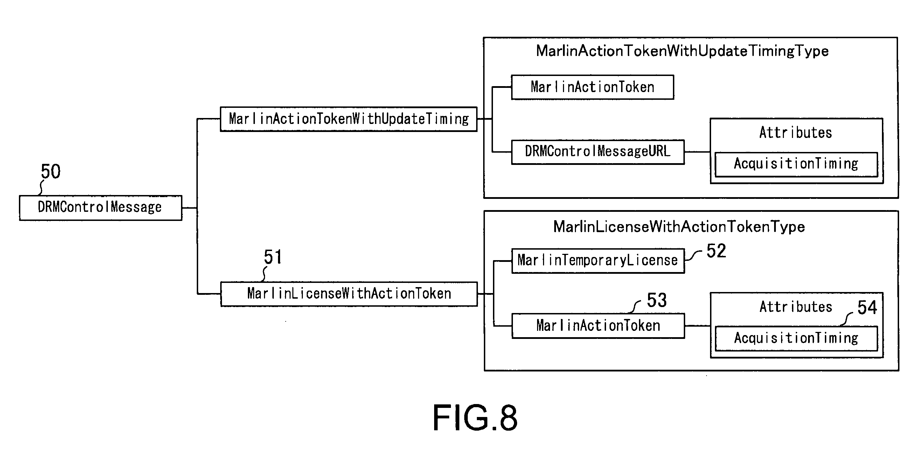

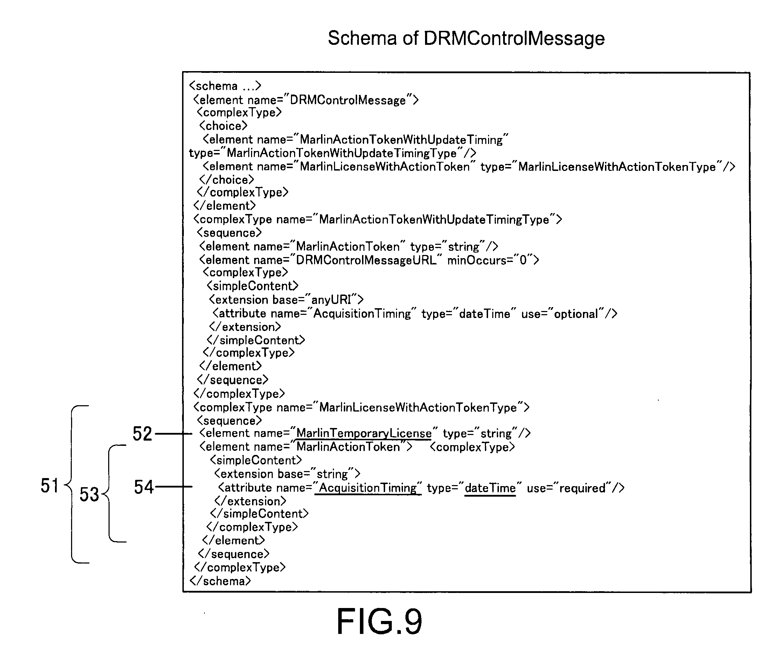

Figs. 8 and 9 are diagrams showing an XML schema that defines a structure of the DRMControlMessage. In a DRMControlMessage 50, as subelements of a Marlin License With Action Token Type element 51, there can be described a MarlinTemporaryLicense element 52 that stores a temporary license and a MarlinActionToken element 53 that can store a main license acquisition request timing as a value of AcquisitionTiming attributes 54.

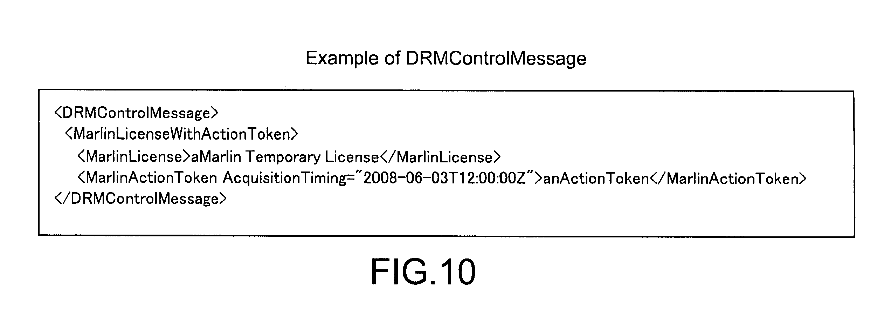

Fig. 10 is an example of a DRMControlMessage based on the XML schema of the DRMControlMessage. In this example, a text string of "aMarlinTemporaryLicense" is stored as the MarlinTemporaryLicense element 52. Specifically, the "aMarlinTemporaryLicense" is a temporary content key Kcp. In the MarlinActionToken element 53, "June 3, 2008, at 12 O'clock" is stored as a main license acquisition request timing that is a value of the AcquisitionTiming attributes 54.

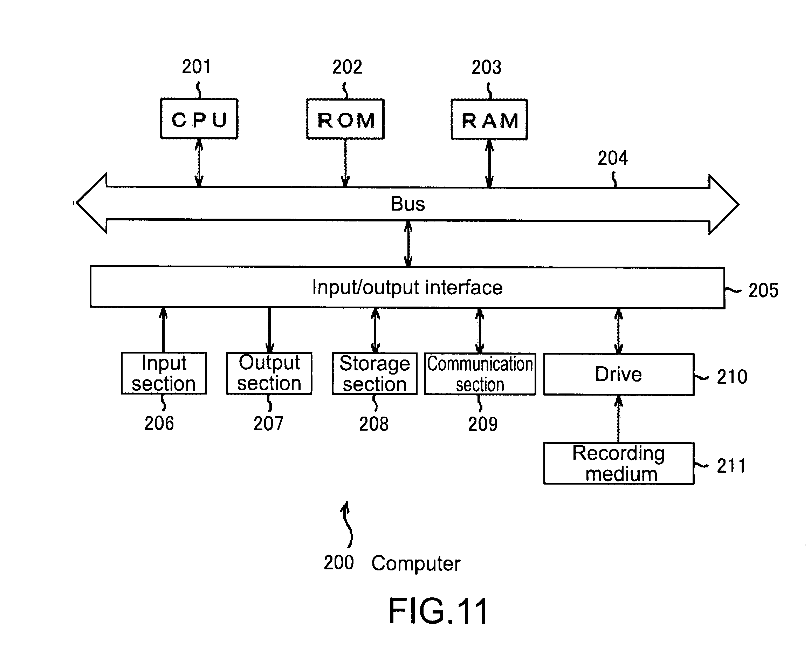

Fig. 11 is a block diagram showing a structural example of computer hardware that executes a series of processing described above by a program.

In a computer 200, a CPU (Central Processing Unit) 201, a ROM (Read Only Memory) 202, and a RAM (Random Access Memory) 203 are connected to one another through a bus 204.

Further, an input/output interface 205 is connected to the bus 204. Connected to the input/output interface 205 are an input section 206 constituted of a keyboard, a mouse, a microphone, or the like, an output section 207 constituted of a display, a speaker, or the like, a storage section 208 constituted of a hard disk, a nonvolatile memory, or the like, a communication section 209 constituted of a network interface or the like, and a drive 210 that drives removable media 211 such as a magnetic disc, an optical disc, a magnetooptical disc, and a semiconductor memory.

In the computer 200 structured as described above, by the CPU 201 loading a program stored in the storage section 208 to the RAM 203 via the input/output interface 205 and the bus 204 and executing the program, for example, a series of processing described above is performed.

It should be noted that programs that the computer 200 executes may be programs processed in time sequence along the order described herein, or may be programs processed in parallel or at a necessary timing when a call is made.

Further, programs may be processed by one computer, or may be distributed and processed by a plurality of computers. Moreover, programs may be transferred to a remote computer to thereby be processed.

As described above, according to this embodiment, it is possible to avoid concentration of license acquisition requests from a large number of IPTV client terminals 10 at a time right after a broadcast start time of a content in the IPTV server 20, particularly in the license server 22 that performs secure user authentication. Accordingly, it is possible to prevent an operation of the license server 22 from being made unstable due to concentration of excessive loads thereon.

Further, according to this embodiment, since the temporary content key Kcp is distributed from the IPTV server 20 before a license (main license) is duly acquired in the IPTV client terminal 10, a reproduction of a content during a time period from a broadcast start time Ts to Tp of the content is guaranteed. Furthermore, since the IPTV client terminal 10 that has purchased a license during a time period from a broadcast start time Ts to Tp of a content can acquire a main license from the IPTV server 20 during a time period from a time Tpurchase at which the license has been purchased to Tp, a reproduction of the content can be continued after Tp.

It should be noted that the embodiment of the present invention is not limited to the above embodiment, and various modifications can be made without departing from the gist of the present invention.

### Description of Reference Numerals

- 10: IPTV client terminal
- 11: user interface
- 12: web browser
- 13: DRM client
- 14: IPTV media client
- 15: client database
- 20: IPTV server
- 21: web server
- 22: license server
- 23: IPTV media server
- 24: server database
- 30: network
- 100: IPTV system

## Claims

1. A server apparatus, comprising:
a temporary license processing section to set an acquisition request time of a main license within a time period from a broadcast start time to a predetermined set time at random in accordance with an acquisition request of a license for reproducing an encrypted broadcast content, the acquisition request being from a content reception apparatus, and transmit, to the content reception apparatus, information on the acquisition request time of the main license and a temporary license including a temporary content key that corresponds to a reproduction of the broadcast content from the broadcast start time to the predetermined set time; and
a main license processing section to transmit, to the content reception apparatus, the main license including a main content key that corresponds to a whole reproduction of the broadcast content in accordance with an acquisition request of the main license, which is executed in the content reception apparatus based on the information on the acquisition request time.

2. The server apparatus according to claim 1, further comprising:
a first authentication section to perform user authentication by a first system when the acquisition request of the license is received from the content reception apparatus; and
a second authentication section to perform the user authentication by a second system that has a higher security strength than the first system when the acquisition request of the main license is received from the content reception apparatus.

3. The server apparatus according to claim 2,
wherein the temporary license processing section transmits, to the content reception apparatus, information indicating that the main license can be promptly transmitted in response to the acquisition request of the main license in a case where the acquisition request of the license from the content reception apparatus is received in a predetermined time period or more before the broadcast start time of the broadcast content.

4. The server apparatus according to claim 3,
wherein the temporary license processing section transmits, to the content reception apparatus, the information indicating that the main license can be promptly transmitted in response to the acquisition request of the main license in a case where the acquisition request of the license from the content reception apparatus is received after the predetermined set time after the broadcast start time of the broadcast content.

5. A license distribution method, comprising:
setting an acquisition request time of a main license within a time period from a broadcast start time to a predetermined set time at random in accordance with an acquisition request of a license for reproducing an encrypted broadcast content, the acquisition request being from a content reception apparatus, and transmitting, to the content reception apparatus, information on the acquisition request time of the main license and a temporary license including a temporary content key that corresponds to a reproduction of the broadcast content from the broadcast start time to the predetermined set time; and
transmitting, to the content reception apparatus, the main license including a main content key that corresponds to a whole reproduction of the broadcast content in accordance with an acquisition request of the main license, which is executed in the content reception apparatus based on the information on the acquisition request time.

6. A content reception apparatus, comprising:
a temporary license acquisition request section to transmit an acquisition request of a license for reproducing an encrypted broadcast content to a first server apparatus, and acquire, as a response from the first server apparatus, information on an acquisition request time of a main license that is set at random within a time period from a broadcast start time to a predetermined set time, and a temporary license including a temporary content key that corresponds to a reproduction of the broadcast content from the broadcast start time to the predetermined set time;
a main license acquisition request section to transmit an acquisition request of the main license to a second server apparatus based on the information on the acquisition request time of the main license, the information being acquired in the first license acquisition request section, and acquire, as a response from the second server apparatus, the main license including a main content key that corresponds to a whole reproduction of the broadcast content; and
a decrypting section to decrypt the encrypted broadcast content by using the temporary content key acquired in the temporary license acquisition request section and the main content key acquired in the main license acquisition request section.
